# EUROPEAN PATENT APPLICATION

(11) **EP 4 790 508 A1**
(43) Date of publication of application: **12.08.2026**
(21) Application number: 25815277.6
(22) Date of filing: 28.05.2025
(51) Int. Cl.: G05D 1/43

(54) **METHOD FOR SNOW-THROWING PROCESSING IN MAP AREA, AND AUTONOMOUS MOBILE DEVICE, DEVICE AND MEDIUM**

(30) Priority: 28.05.2024 CN 202410668071
(71) Applicant: Shenzhen Hanyang Technology Co., Ltd, Shenzhen, Guangdong 518000 (CN)
(72) Inventor: HUANG, Yang, Shenzhen, Guangdong 518000 (CN); LI, Jialai, Shenzhen, Guangdong 518000 (CN); CHEN, Yufan, Shenzhen, Guangdong 518000 (CN)
(74) Representative: Abel & Imray LLP
(86) International application number: PCT/CN2025/097833
(87) International publication number: WO 2025/247286

(57) **Abstract**

Disclosed are a snow throwing method for a map region, an autonomous mobile apparatus, an apparatus, and a medium, which belong to the technical field of regional snow throwing of autonomous mobile apparatus. The method includes: acquiring a working map corresponding to a working region where an autonomous mobile apparatus is located, and a snow throwing position point located on the working map; and controlling, in a case of determining that the working region where the autonomous mobile apparatus is currently located belongs to a target region and determining that accumulated snow in the working region belongs to a target type of accumulated snow, the autonomous mobile apparatus to throw the accumulated snow in the working region to a target snow throwing position point different from the snow throwing position point.

## Description

### CROSS-REFERENCE TO RELATED APPLICATIONS

The present disclosure claims priority to Chinese Patent Application No. 202410668071.2, filed with the China National Intellectual Property Administration on May 28, 2024, and entitled "SNOW THROWING METHOD FOR MAP REGION, AUTONOMOUS MOBILE APPARATUS, APPARATUS, AND MEDIUM", which is incorporated herein by reference in its entirety.

### TECHNICAL FIELD

The present disclosure relates to the technical field of regional snow throwing of autonomous mobile apparatus, and in particular to a snow throwing method for a map region, an autonomous mobile apparatus, an apparatus, and a medium.

### BACKGROUND

The autonomous mobile apparatus, a type of robot designed specifically for yard snow removal, has a core function of transferring accumulated snow from a working region to a designated position. However, in an actual working process, the autonomous mobile apparatus faces a significant technical challenge in that it is difficult for existing snow rolling blade structures and snow throwing blade structures to effectively and remotely throw some accumulated snow with high humidity and high viscosity to a preset working region, which is recognized by the inventor. Instead, accumulated snow is probably thrown to a non-snow-throwing region. This limitation significantly reduces working efficiency and a snow removal effect of the autonomous mobile apparatus.

Thus, the inventor realizes that there is an urgent need for a new technical solution to solve the above technical problem.

### SUMMARY

In view of this, for the above technical problem, it is necessary to provide a snow throwing method for a map region, an autonomous mobile apparatus, an apparatus, and a medium to solve the problem that working efficiency and a snow removal effect of an existing autonomous mobile apparatus are reduced due to viscosity of accumulated snow in the prior art.

To achieve the above objective, a snow throwing method for a map region is provided. The method includes:
acquiring a working map corresponding to a working region where an autonomous mobile apparatus is located, and a snow throwing position point located on the working map; and
controlling, in a case of determining that the working region where the autonomous mobile apparatus is currently located belongs to a target region and determining that accumulated snow in the working region belongs to a target type of accumulated snow, the autonomous mobile apparatus to throw the accumulated snow in the working region to a target snow throwing position point different from the snow throwing position point.

Optionally, the method further includes: determining whether a user resets a charging pile position; and
controlling, after it is determined that the user resets the charging pile position, the autonomous mobile apparatus to travel and to be located in the working region according to a charging pile device, and forming the working map corresponding to the working region.

Optionally, before acquiring a snow throwing position point located on the working map, the method further includes:
taking a position point divided by a user on the working map as the snow throwing position point; or
taking a target boundary on the working map as the snow throwing position point; or
taking a position point most frequently serving as a snow throwing position point during a historical time period on the working map as the snow throwing position point.

Optionally, the step of controlling the autonomous mobile apparatus to throw the accumulated snow in the working region to a target snow throwing position point different from the snow throwing position point includes:
determining a first direction corresponding to the snow throwing position point;
determining a current position point of the autonomous mobile apparatus in the working region;
determining the target snow throwing position point in a second direction according to the current position point and the first direction; and
continuously controlling the autonomous mobile apparatus to throw the accumulated snow in the working region to the target snow throwing position point in the second direction.

Optionally, the step of determining the target snow throwing position point in a second direction according to the current position point and the first direction includes:
determining, in a case where the current position point is adjacent to the snow throwing position point, the target snow throwing position point in the second direction and adjacent to the snow throwing position point according to the current position point and the first direction; and
continuously determining, in a case where the current position point is away from the snow throwing position point, the target snow throwing position point in the second direction and away from the snow throwing position point according to the current position point and the first direction.

Optionally, after controlling the autonomous mobile apparatus to throw the accumulated snow in the working region to a target snow throwing position point different from the snow throwing position point, the method further includes:
continuously controlling the autonomous mobile apparatus to throw accumulated snow at the target snow throwing position point until the accumulated snow is finally thrown to the snow throwing position point.

Optionally, the step of continuously controlling the autonomous mobile apparatus to throw accumulated snow at the target snow throwing position point until the accumulated snow is finally thrown to the snow throwing position point includes:
determining whether a target snow throwing prohibited region exists in the working region;
determining, in a case of determining that the target snow throwing prohibited region exists in the working region, a position relation between the target snow throwing prohibited region and the target snow throwing position point;
continuously controlling, in a case where the target snow throwing position point is located in the target snow throwing prohibited region after it is determined that no target object exists in the target snow throwing prohibited region, the autonomous mobile apparatus to throw the accumulated snow at the target snow throwing position point until the accumulated snow is finally thrown to the snow throwing position point; and
continuously controlling, in a case where the target snow throwing position point is located outside the target snow throwing prohibited region, the autonomous mobile apparatus to throw the accumulated snow at the target snow throwing position point until the accumulated snow is finally thrown to the snow throwing position point.

To achieve the above objective, an autonomous mobile apparatus is further provided. The autonomous mobile apparatus includes a controller and a memory, where the memory stores a snow throwing program for a map region, and the controller is configured to execute the snow throwing program for a map region to implement the following steps:
acquiring a working map corresponding to a working region where the autonomous mobile apparatus is located, and a snow throwing position point located on the working map; and
controlling, in a case of determining that the working region where the autonomous mobile apparatus is currently located belongs to a target region and determining that accumulated snow in the working region belongs to a target type of accumulated snow, the autonomous mobile apparatus to throw the accumulated snow in the working region to a target snow throwing position point different from the snow throwing position point.

To achieve the above objective, a computer device is further provided. The computer device includes a memory, a processor, and a computer program stored in the memory and runnable in the processor, where the processor, when executing the computer program, implements the following steps:
acquiring a working map corresponding to a working region where the autonomous mobile apparatus is located, and a snow throwing position point located on the working map; and
controlling, in a case of determining that the working region where the autonomous mobile apparatus is currently located belongs to a target region and determining that accumulated snow in the working region belongs to a target type of accumulated snow, the autonomous mobile apparatus to throw the accumulated snow in the working region to a target snow throwing position point different from the snow throwing position point.

To achieve the above objective, a computer-readable storage medium is further provided. The computer-readable storage medium stores a computer program, where the computer program, when executed by a processor, implements the following steps:
acquiring a working map corresponding to a working region where an autonomous mobile apparatus is located, and a snow throwing position point located on the working map; and
controlling, in a case of determining that the working region where the autonomous mobile apparatus is currently located belongs to a target region and determining that accumulated snow in the working region belongs to a target type of accumulated snow, the autonomous mobile apparatus to throw the accumulated snow in the working region to a target snow throwing position point different from the snow throwing position point.

The snow throwing method for a map region provided by the present disclosure includes: acquiring a working map corresponding to a working region where an autonomous mobile apparatus is located, and a snow throwing position point located on the working map; and controlling, in a case of determining that the working region where the autonomous mobile apparatus is currently located belongs to a target region and determining that accumulated snow in the working region belongs to a target type of accumulated snow, the autonomous mobile apparatus to throw the accumulated snow in the working region to a target snow throwing position point different from the snow throwing position point. Thus, the accumulated snow of the target type to which the target region belongs in the working region is thrown to another target snow throwing position point. The accumulated snow at the target snow throwing position point can continue to be removed when the autonomous mobile apparatus travels subsequently to ensure an overall snow removal effect in the working region and working efficiency of the autonomous mobile apparatus.

The details in one or more embodiments of the present disclosure are set forth in the following accompanying drawings and descriptions, and other features and advantages of the present disclosure will become apparent from the description, accompanying drawings, and claims.

### BRIEF DESCRIPTION OF DRAWINGS

To describe the technical solutions in embodiments of the present disclosure more clearly, the accompanying drawings required for describing the embodiments of the present disclosure are briefly introduced below. Apparently, the accompanying drawings in the following descriptions show merely some embodiments of the present disclosure, and those of ordinary skill in the art can also derive other accompanying drawings from these accompanying drawings without creative efforts.
FIG. 1 is a schematic flowchart of an embodiment of a snow throwing method for a map region according to the present disclosure; and
FIG. 2 is a schematic block diagram of an embodiment of an autonomous mobile apparatus according to the present disclosure.

### DETAILED DESCRIPTION

The technical solutions in embodiments of the present disclosure are clearly and completely described below with reference to the accompanying drawings in the embodiments of the present disclosure. Apparently, the embodiments described are merely some embodiments rather than all embodiments of the present disclosure. All other embodiments derived by those of ordinary skill in the art based on the embodiments of the present disclosure without creative efforts fall within the scope of protection of the present disclosure.

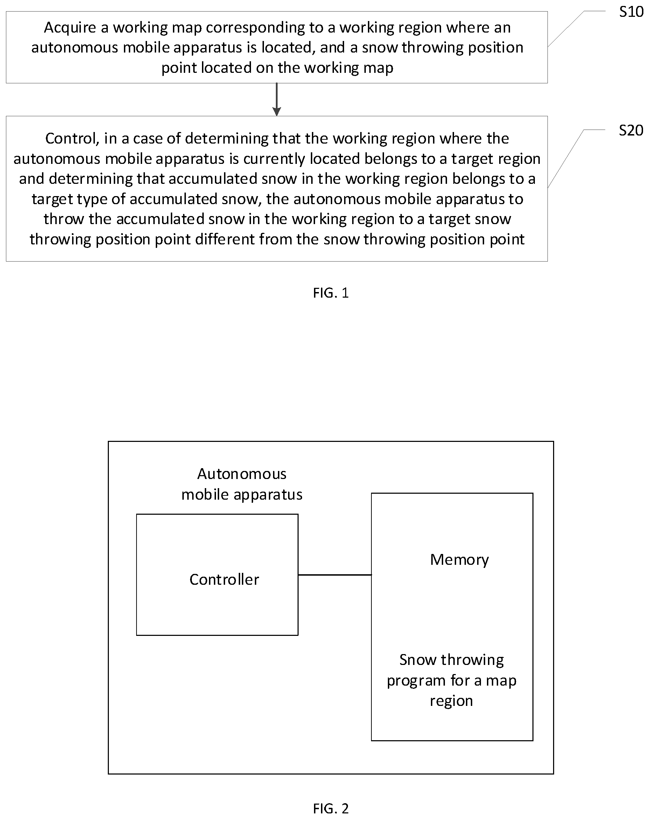

As shown in FIG. 1, a regional working method of an autonomous mobile apparatus is provided in an embodiment of the present disclosure. The method may be applied to a controller of the autonomous mobile apparatus. The controller may alternatively be interpreted as a microcontroller unit (MCU), etc. The method includes the following steps S10 and S20.

S10, a working map corresponding to a working region where an autonomous mobile apparatus is located, and a snow throwing position point located on the working map are acquired.

Understandably, the autonomous mobile apparatus may be an autonomous mobile tool configured to remove accumulated snow in the working region. The autonomous mobile apparatus may be divided into a vehicle front and a vehicle body, the vehicle front is detachable from the vehicle body, and a working device capable of removing snow is arranged on the vehicle front. The working device is provided with snow rolling blades and snow throwing blades. Accumulated snow on a surface of the working region may be rolled to the snow throwing blades through the snow rolling blades, and finally thrown to an external position through the snow throwing blades. The vehicle body may be provided with a traveling member allowing the autonomous mobile apparatus to move autonomously. The traveling member may be of a crawler structure or of a structure composed of rotatable wheels. The working map may be used as a basis for movement of the autonomous mobile apparatus, or a visual tool (mapping a movement track of the autonomous mobile apparatus to a movement path on the working map) for a user. The working region may be a working place actually required by the autonomous mobile apparatus, and a specific shape of the working region is not limited in the embodiment. For example, the working region may be in a regular rectangular shape or an irregular polygonal shape. The snow throwing position point may be a position point to which the accumulated snow is thrown by the autonomous mobile apparatus. The position point may be set by the user, or automatically generated according to specific needs. Preferably, the position point is required not to affect normal travel of the user or required to facilitate removal of accumulated snow.

S20, in a case of determining that the working region where the autonomous mobile apparatus is currently located belongs to a target region and determining that accumulated snow in the working region belongs to a target type of accumulated snow, the autonomous mobile apparatus is controlled to throw the accumulated snow in the working region to a target snow throwing position point different from the snow throwing position point.

Understandably, the target region may indicate a narrow and bent position in a planned movement path of the autonomous mobile apparatus in the working region. The movement path is a path planned according to the working region, and the path may be parallel to target boundaries (such as short sides and long sides of a rectangular working region) of an autonomous mobile region. The target type of accumulated snow may indicate accumulated snow with a temperature and humidity at certain levels. The target snow throwing position point may indicate a position point (at the position point, the autonomous mobile apparatus subsequently removes the accumulated snow at the portion along the movement path) adjacent to or away from the snow throwing position point. At the position point, the target type of accumulated snow may be thrown off through short-distance snow throwing. The position point is continuously updated. In this way, a process of throwing off the target type of accumulated snow may be performed repeatedly.

Specifically, the method for determining that the current region belongs to the target region may be confirmed through a location sensor arranged in the autonomous mobile apparatus. Further, a current position point of the autonomous mobile apparatus is determined through the location sensor. After the current position point is compared with the working map, whether the current region belongs to the target region is determined. The method for determining whether the accumulated snow in the working region belongs to the target type of accumulated snow may be confirmed through an identification sensor arranged in the autonomous mobile apparatus. Further, the temperature and humidity of accumulated snow are determined through a load sensor or a temperature and humidity sensor. Whether the accumulated snow in the working region belongs to the target type of accumulated snow is determined through the temperature and humidity of accumulated snow. The load sensor is mounted in the blade of the autonomous mobile apparatus, and the temperature and humidity of the accumulated snow are mapped based on a residual amount on the blade.

In the embodiment including S10 and S20, the accumulated snow of the target type to which the target region belongs in the working region is thrown to another target snow throwing position point. The accumulated snow at the target snow throwing position point may continue to be removed when the autonomous mobile apparatus travels subsequently. Thus, the problems that viscous accumulated snow is thrown to a non-snow-throwing region, and the snow removal effect in other regions and the overall working efficiency of the autonomous mobile apparatus are affected at present are solved.

In an embodiment, before the step that a working map corresponding to a working region where an autonomous mobile apparatus is located is acquired, the method further includes:
whether a user resets a charging pile position is determined;
after it is determined that the user resets the charging pile position, the autonomous mobile apparatus is controlled to travel and to be located in the working region according to a charging pile device, and the working map corresponding to the working region is formed.

Understandably, the charging pile position may indicate a position where the autonomous mobile apparatus is charged. The position may be a position of a wireless charging pile or a position of a wired charging pile. Specifically, the user may set the charging pile position on an initial map in a display terminal. The charging pile position cannot be set in a travel path planned for the autonomous mobile apparatus or on a sidewalk. Once the charging pile position is set at the above position, the user is reminded by the display terminal. The autonomous mobile apparatus is controlled to travel and to be located in the working region according to the charging pile device mainly as follows: the autonomous mobile apparatus travels and is located based on the proximity of the charging pile position; new map data generated after the charging pile position is reset, and missing map data of an original charging pile position are acquired; and the new map data are supplemented to the initial map, and the missing map data are covered and supplemented to the initial map.

The embodiment involves a process of regenerating the working map after the charging pile position is reset. After the charging pile position on the working map is updated, the autonomous mobile apparatus is controlled to generate a remaining working map in the working region based on a new charging pile position. Thus, working efficiency of the autonomous mobile apparatus in a mapping process is improved.

In another embodiment, before the step that a working map corresponding to a working region where an autonomous mobile apparatus is located is acquired, the method further includes:
whether a user resets a charging pile position is determined; and
after it is determined that the user resets the charging pile position, the working map corresponding to the working region is directly formed according to a charging pile device.

Understandably, the charging pile position is as mentioned above, and will not be repeated herein. In the embodiment, the working map is generated after being processed by the controller. In another embodiment, the working map may be generated through the display terminal corresponding to the user, and the display terminal sends the generated map to the controller.

In the embodiment, the initial map may be generated directly based on the charging pile position without deleting the map data of the previous initial map. To be specific, after the charging pile device is supplemented to the initial map based on the map data excluding the charging pile position, the working map capable of including the movement path of the autonomous mobile apparatus is formed.

In an embodiment, before the step that a snow throwing position point located on the working map is acquired, the method further includes:
a position point divided by a user on the working map is taken as the snow throwing position point; or
a target boundary on the working map is taken as the snow throwing position point; or
a position point most frequently serving as a snow throwing position point during a historical time period on the working map is taken as the snow throwing position point.

Understandably, the user may select a desired position point on the working map in the display terminal as the snow throwing position point, or take the target boundary away from a house or a garage on the working map as the snow throwing position point, or take the position point serving as the snow throwing position point repeatedly during a historical time period (such as the corresponding initial map generated when the charging pile position is not reset) on the working map as the snow throwing position point.

In the embodiment, the user is allowed to self-define the snow throwing position according to the user's own needs and yard layout to satisfy personalized snow removal needs. Moreover, ineffective snow throwing operations are reduced, and snow removal efficiency is improved by directly designating the snow throwing position. It is ensured that the accumulated snow is thrown out of the yard boundary, accumulation of the accumulated snow on important passages or apparatuses is avoided, and use safety and convenience of the yard are improved. By throwing the accumulated snow out of the yard boundary, it is less necessary to perform manual or mechanical secondary processing subsequently, and working intensity is reduced. By analyzing historical data, the most common snow throwing position is selected, so that the accumulated snow is thrown to the most frequently-selected position. An operation path of a snow removal apparatus can be optimized, and unnecessary movement and energy consumption can be reduced. The necessity of operations by the user each time is reduced, and an automation degree of the autonomous mobile apparatus is improved by automatically selecting the snow throwing position.

In an embodiment, the step that the autonomous mobile apparatus is controlled to throw the accumulated snow in the working region to a target snow throwing position point different from the snow throwing position point includes:
a first direction corresponding to the snow throwing position point is determined;
a current position point of the autonomous mobile apparatus in the working region is determined;
the target snow throwing position point in a second direction is determined according to the current position point and the first direction; and
the autonomous mobile apparatus is continuously controlled to throw the accumulated snow in the working region to the target snow throwing position point in the second direction.

Understandably, the first direction may be a direction relative to the autonomous mobile apparatus. In the direction, the orientation of the working device arranged on the autonomous mobile apparatus is identical to the first direction. The working device includes snow rolling blades, snow throwing blades, and a snow throwing cylinder. The orientation of the snow throwing cylinder is the first direction. The current position point may be a position of the autonomous mobile apparatus in the working region, and the position of the autonomous mobile apparatus may be determined through the location sensor of the autonomous mobile apparatus. The second direction may be an actual snow throwing direction relative to the autonomous mobile apparatus. Specifically, when the working region is too large, the autonomous mobile apparatus cannot directly throw the accumulated snow in the working region to the snow throwing position point. In this case, the working region needs to be divided into a plurality of regions. Moreover, when it is determined that the current position point of the autonomous mobile apparatus is located in a remote region, a plurality of second directions are probably determined, or are probably not identical to the first direction. When it is determined that the current position point of the autonomous mobile apparatus is located in an adjacent region, one first direction is probably determined, or is probably identical to the first direction. The target position point may be the actual snow throwing position point of the autonomous mobile apparatus. Specifically, by controlling a snow throwing angle and snow throwing power of the working device of the autonomous mobile apparatus, the accumulated snow in the working region is thrown to the target snow throwing position point.

In the embodiment, by defining the first direction of the snow throwing position point and combining the current position point of the autonomous mobile apparatus, the target snow throwing position point in the second direction can be accurately calculated to ensure that the accumulated snow is accurately thrown to a predetermined region, and prevent the accumulated snow from being scattered or accumulated at an incorrect non-snow-throwing position.

In an embodiment, the step that the target snow throwing position point in a second direction is determined according to the current position point and the first direction includes:
in a case where the current position point is adjacent to the snow throwing position point, the target snow throwing position point in the second direction and adjacent to the snow throwing position point is determined according to the current position point and the first direction; and
in a case where the current position point is away from the snow throwing position point, the target snow throwing position point in the second direction and away from the snow throwing position point is continuously determined according to the current position point and the first direction.

Understandably, as can be seen from region division mentioned above, in a case where the current position point is located in the adjacent region (equivalent to when the current position point is adjacent to the snow throwing position point), the autonomous mobile apparatus is controlled to directly determine one second direction identical to the first direction, and throw the accumulated snow to the target snow throwing position point corresponding to the second direction. In a case where the current position point is located in the remote region (equivalent to when the current position point is away from the snow throwing position point), the autonomous mobile apparatus is controlled to determine one second direction identical to or different from the first direction repeatedly, and throw the accumulated snow to the target snow throwing position point corresponding to the second direction.

In the embodiment, in a case where the current position point is away from the snow throwing position point, the accumulated snow needs to be thrown from the position point farther away from the snow throwing position point to the position point more adjacent to the snow throwing position point first. In this way, a plurality of sequential target snow throwing position points need to be continuously determined. Otherwise, one position point identical to the first direction may be determined, so that the accumulated snow may be thrown from the target snow throwing position point to the snow throwing position point by the autonomous mobile apparatus conveniently.

In an embodiment, after the step that the autonomous mobile apparatus is controlled to throw the accumulated snow in the working region to a target snow throwing position point different from the snow throwing position point, the method further includes:
the autonomous mobile apparatus is continuously controlled to throw accumulated snow at the target snow throwing position point until the accumulated snow is finally thrown to the snow throwing position point.

Understandably, the snow throwing position point is taken as a final snow throwing position point. Long-distance throwing of some accumulated snow to the snow throwing position point cannot be achieved due to the position and the type. In this way, the accumulated snow may be thrown to a designated region multiply times in a repeated snow throwing manner. Thus, the influence on the snow removal effect and the snow removal efficiency in the working region after the accumulated snow is thrown to the non-snow-throwing region can be avoided.

In an embodiment, the step that the autonomous mobile apparatus is continuously controlled to throw accumulated snow at the target snow throwing position point until the accumulated snow is finally thrown to the snow throwing position point includes:
whether a target snow throwing prohibited region exists in the working region is determined;
in a case of determining that the target snow throwing prohibited region exists in the working region, a position relation between the target snow throwing prohibited region and the target snow throwing position point is determined;
in a case where the target snow throwing position point is located in the target snow throwing prohibited region after it is determined that no target object exists in the target snow throwing prohibited region, the autonomous mobile apparatus is continuously controlled to throw the accumulated snow at the target snow throwing position point until the accumulated snow is finally thrown to the snow throwing position point; and
in a case where the target snow throwing position point is located outside the target snow throwing prohibited region, the autonomous mobile apparatus is continuously controlled to throw the accumulated snow at the target snow throwing position point until the accumulated snow is finally thrown to the snow throwing position point.

Understandably, the target snow throwing prohibited region may be interpreted as a region to which the autonomous mobile apparatus cannot move temporarily for snow removal. The target object may be interpreted as an object parked or placed in the region, for example, a vehicle parked in the region or various movable objects placed in the region.

In the embodiment, it is first determined whether the target snow throwing position point is located in the target snow throwing prohibited region. In a case where the target snow throwing position point is located in the target snow throwing prohibited region, whether the target object exists in the target snow throwing prohibited region is determined through a vision sensor arranged in the autonomous mobile apparatus. Finally, in a case where no target object exists, the accumulated snow in the snow throwing prohibited region is continuously thrown to the snow throwing position point. In a case where the target snow throwing position point is not located in the target snow throwing prohibited region, the accumulated snow at the target snow throwing position point is directly thrown to the snow throwing position point. In this way, the influence of the accumulated snow in the non-snow-throwing region on snow removal and snow removal efficiency in an entire region can be avoided.

The present disclosure provides the snow throwing method for a map region, and belongs to the technical field of regional snow throwing of autonomous mobile apparatus. The working map corresponding to the working region where the autonomous mobile apparatus is located, and the snow throwing position point located on the working map are acquired. In a case of determining that the working region where the autonomous mobile apparatus is currently located belongs to the target region and determining that the accumulated snow in the working region belongs to the target type of accumulated snow, the autonomous mobile apparatus is controlled to throw the accumulated snow in the working region to the target snow throwing position point different from the snow throwing position point. Thus, the accumulated snow of the target type to which the target region belongs in the working region is thrown to another target snow throwing position point. The accumulated snow at the target snow throwing position point can continue to be removed when the autonomous mobile apparatus travels subsequently to ensure an overall snow removal effect in the working region and working efficiency of the autonomous mobile apparatus.

It should be understood that in the embodiments, serial numbers of the steps do not indicate the successive order of execution. The order of execution of each process should be determined through the function and internal logic of each process, and should not constitute any limitation on implementation processes in the embodiments of the present disclosure.

As shown in FIG. 2, an autonomous mobile apparatus is further provided. The autonomous mobile apparatus includes a controller and a memory, where the memory stores a snow throwing program for a map region, and the controller, when executing the snow throwing program for a map region, implements steps of the above snow throwing method for a map region. A vehicle front and a vehicle body of the autonomous mobile apparatus are provided with various sensors, such as the location sensor, the load sensor, the temperature and humidity sensor, and the vision sensor mentioned above. Each of the controller and the memory may be arranged at a position of the vehicle front or a position of the vehicle body of the autonomous mobile apparatus.

The execution functions of the controller are in one-to-one correspondence to the snow throwing method for a map region in the above embodiment. Reference can be made to the definition of the snow throwing method for a map region for the specific definition of the controller, which will not be repeated herein. Reference can be made to the definition of the snow throwing method for a map region for a process executed by each sub-module of the controller, which will not be repeated herein. The process can be fully or partially implemented through software, hardware, and their combination. Each sub-module can be embedded in or independent of the controller in a form of hardware, or stored in the memory of the controller in a form of software, so that the controller invokes and executes the operation corresponding to each sub-module.

In an embodiment, a computer device is provided. The computer device includes a memory, a processor, and a computer program stored in the memory and runnable in the processor, where the processor, when executing the computer program, implements steps of the snow throwing method for a map region in the above embodiment.

In an embodiment, the present disclosure further provides one or more computer-readable storage media storing computer-readable instructions. The computer-readable storage medium according to the embodiment includes a non-volatile readable storage medium and a volatile readable storage medium. The computer-readable instructions are stored in the computer-readable storage medium. The computer-readable instructions, when executed by at least one processor, cause the at least one processor to implement steps of the snow throwing method for a map region in the above embodiment.

Those of ordinary skill in the art can understand that all or some of the flows in the above embodiment method can be implemented by instructing related hardware through the computer-readable instructions. The computer-readable instructions can be stored in a non-volatile readable storage medium or a volatile readable storage medium. The computer-readable instructions, when executed, can include the flows in the embodiment of each method described above. Any reference to the memory, storage, databases, etc. used in each embodiment provided by the present disclosure can include the non-volatile memory and/or the volatile memory. The non-volatile memory can include a read only memory (ROM), a programmable ROM (PROM), an electrically programmable ROM (EPROM), an electrically erasable programmable ROM (EEPROM), or a flash memory. The volatile memory can include a random access memory (RAM) or an external cache memory. Illustratively rather than restrictively, the RAM is available in various forms, such as a static RAM (SRAM), a dynamic RAM (DRAM), a synchronous DRAM (SDRAM), a double data rate SDRAM (DDRSDRAM), an enhanced SDRAM (ESDRAM), a synchlink DRAM (SLDRAM), a Rambus direct RAM (RDRAM), a direct Rambus dynamic RAM (DRDRAM), and a Rambus dynamic RAM (RDRAM).

Those skilled in the art can clearly understand that for convenience and brevity of description, the division of the above function units or modules is merely illustratively described. In actual application, the above functions can be assigned to different function units and modules for accomplishment as demanded. To be specific, the internal structure of the autonomous mobile apparatus is divided into different function units or modules to complete all or some of the functions described above.

The above embodiments are merely used to describe the technical solutions of the present disclosure, and are not intended to limit the present disclosure. Although the present disclosure is described in detail with reference to the foregoing embodiments, those of ordinary skill in the art should understand that they can still make modifications to the technical solutions described in the foregoing embodiments, or make equivalent substitutions to some technical features in the embodiments. These modifications or substitutions do not make the essence of the corresponding technical solution depart from the spirit and scope of the technical solutions in the embodiments of the present disclosure, and should fall within the scope of protection of the present disclosure.

## Claims

1. A snow throwing method for a map region, comprising:
acquiring a working map corresponding to a working region where an autonomous mobile apparatus is located, and a snow throwing position point located on the working map; and
controlling, in a case of determining that the working region where the autonomous mobile apparatus is currently located belongs to a target region and determining that accumulated snow in the working region belongs to a target type of accumulated snow, the autonomous mobile apparatus to throw the accumulated snow in the working region to a target snow throwing position point different from the snow throwing position point.

2. The snow throwing method for a map region according to claim 1, wherein before acquiring a working map corresponding to a working region where an autonomous mobile apparatus is located, the method further comprises:
determining whether a user resets a charging pile position; and
controlling, after it is determined that the user resets the charging pile position, the autonomous mobile apparatus to travel and to be located in the working region according to a charging pile device, and forming the working map corresponding to the working region.

3. The snow throwing method for a map region according to claim 1, wherein before acquiring a working map corresponding to a working region where an autonomous mobile apparatus is located, the method further comprises:
determining whether a user resets a charging pile position; and
directly forming, after it is determined that the user resets the charging pile position, the working map corresponding to the working region according to a charging pile device.

4. The snow throwing method for a map region according to claim 1, wherein before acquiring a snow throwing position point located on the working map, the method further comprises:
taking a position point divided by a user on the working map as the snow throwing position point; or
taking a target boundary on the working map as the snow throwing position point; or
taking a position point most frequently serving as a snow throwing position point during a historical time period on the working map as the snow throwing position point.

5. The snow throwing method for a map region according to claim 1, wherein the step of controlling the autonomous mobile apparatus to throw the accumulated snow in the working region to a target snow throwing position point different from the snow throwing position point comprises:
determining a first direction corresponding to the snow throwing position point;
determining a current position point of the autonomous mobile apparatus in the working region;
determining the target snow throwing position point in a second direction according to the current position point and the first direction; and
continuously controlling the autonomous mobile apparatus to throw the accumulated snow in the working region to the target snow throwing position point in the second direction.

6. The snow throwing method for a map region according to claim 5, wherein the step of determining the target snow throwing position point in a second direction according to the current position point and the first direction comprises:
determining, in a case where the current position point is adjacent to the snow throwing position point, the target snow throwing position point in the second direction and adjacent to the snow throwing position point according to the current position point and the first direction; and
continuously determining, in a case where the current position point is away from the snow throwing position point, the target snow throwing position point in the second direction and away from the snow throwing position point according to the current position point and the first direction.

7. The snow throwing method for a map region according to claim 1, wherein after controlling the autonomous mobile apparatus to throw the accumulated snow in the working region to a target snow throwing position point different from the snow throwing position point, the method further comprises:
continuously controlling the autonomous mobile apparatus to throw accumulated snow at the target snow throwing position point until the accumulated snow is finally thrown to the snow throwing position point.

8. The snow throwing method for a map region according to claim 7, wherein the step of continuously controlling the autonomous mobile apparatus to throw accumulated snow at the target snow throwing position point until the accumulated snow is finally thrown to the snow throwing position point comprises:
determining whether a target snow throwing prohibited region exists in the working region;
determining, in a case of determining that the target snow throwing prohibited region exists in the working region, a position relation between the target snow throwing prohibited region and the target snow throwing position point;
continuously controlling, in a case where the target snow throwing position point is located in the target snow throwing prohibited region after it is determined that no target object exists in the target snow throwing prohibited region, the autonomous mobile apparatus to throw the accumulated snow at the target snow throwing position point until the accumulated snow is finally thrown to the snow throwing position point; and
continuously controlling, in a case where the target snow throwing position point is located outside the target snow throwing prohibited region, the autonomous mobile apparatus to throw the accumulated snow at the target snow throwing position point until the accumulated snow is finally thrown to the snow throwing position point.

9. An autonomous mobile apparatus, comprising a controller and a memory, wherein the memory stores a snow throwing program for a map region, and the controller is configured to execute the snow throwing program for a map region to implement the following steps:
acquiring a working map corresponding to a working region where the autonomous mobile apparatus is located, and a snow throwing position point located on the working map; and
controlling, in a case of determining that the working region where the autonomous mobile apparatus is currently located belongs to a target region and determining that accumulated snow in the working region belongs to a target type of accumulated snow, the autonomous mobile apparatus to throw the accumulated snow in the working region to a target snow throwing position point different from the snow throwing position point.

10. A computer device, comprising a memory, a processor, and a computer program stored in the memory and runnable in the processor, wherein the processor, when executing the computer program, implements the following steps:
acquiring a working map corresponding to a working region where an autonomous mobile apparatus is located, and a snow throwing position point located on the working map; and
controlling, in a case of determining that the working region where the autonomous mobile apparatus is currently located belongs to a target region and determining that accumulated snow in the working region belongs to a target type of accumulated snow, the autonomous mobile apparatus to throw the accumulated snow in the working region to a target snow throwing position point different from the snow throwing position point.

11. A computer-readable storage medium, storing a computer program, wherein the computer program, when executed by a processor, implements the following steps:
acquiring a working map corresponding to a working region where an autonomous mobile apparatus is located, and a snow throwing position point located on the working map; and
controlling, in a case of determining that the working region where the autonomous mobile apparatus is currently located belongs to a target region and determining that accumulated snow in the working region belongs to a target type of accumulated snow, the autonomous mobile apparatus to throw the accumulated snow in the working region to a target snow throwing position point different from the snow throwing position point.
